# FASCICULE DE BREVET EUROPEEN

(11) **EP 3 615 390 B1**
(45) Date de publication et mention de la délivrance du brevet: **08.09.2021**
(21) Numéro de dépôt: 18717945.2
(22) Date de dépôt: 19.04.2018
(51) Int. Cl.: B60S 1/38, B60S 1/52

(54) **EMBOUT D'EXTRÉMITÉ DESTINE À UN BALAI D'ESSUYAGE**
ENDSTÜCK FÜR EIN WISCHERBLATT
END PIECE FOR A WIPER BLADE

(30) Priorité: 28.04.2017 FR 1753790
(43) Date de publication de la demande: 04.03.2020
(73) Titulaire: Valeo Systèmes d'Essuyage, 78322 Le Mesnil Saint Denis (FR)
(72) Inventeur: BARRET, Guillaume, 63500 Issoire (FR); BOUSSET, Xavier, 63500 Issoire (FR); THEBAULT, Denis, 63500 Issoire (FR)
(74) Mandataire: Valeo Visibility
(86) Numéro de dépôt international: PCT/EP2018/060093
(87) Numéro de publication internationale: WO 2018/197340

(56) Documents cités:
- EP-A1- 3 081 440
- EP-A1- 3 135 547
- WO-A1-2009/053229

## Description

Le domaine de la présente invention est celui des systèmes d'essuyage destinés à équiper un véhicule automobile. Elle a pour objet un embout d'extrémité destiné à être disposé à une extrémité d'un balai d'essuyage d'un tel système d'essuyage.

Un véhicule automobile est couramment équipé d'un système d'essuyage destiné à retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame d'essuyage réalisée en un matériau élastique. En frottant contre une surface vitrée, avant ou arrière, du véhicule automobile, la lame d'essuyage en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame d'essuyage en plusieurs zones distinctes, soit un balai d'essuyage comportant au moins un élément de structure qui maintient la lame d'essuyage sur toute sa longueur, autrement appelé « balai plat », le balai d'essuyage est rattaché à une partie terminale du bras d'entraînement par l'intermédiaire d'un dispositif de connexion qui comprend un connecteur monté solidaire du balai d'essuyage.

A chacune des extrémités longitudinales du balai d'essuyage dans sa variante « balai plat », la lame d'essuyage et l'élément de structure sont équipées d'un embout d'extrémité qui participe d'un maintien solidaire de la lame d'essuyage et de l'élément de structure entre eux.

Classiquement, ces embouts d'extrémité comprennent un espace configuré pour recevoir une portion de la lame d'essuyage, un autre espace configuré pour recevoir l'élément de structure et un organe permettant le maintien de l'embout d'extrémité en position sur l'élément de structure.

On comprend que pour remplir sa fonction première, cet organe de maintien de l'embout d'extrémité en position sur l'élément de structure s'étend au moins partiellement dans l'autre espace, c'est-à-dire celui configuré pour recevoir l'élément de structure. L'organe de maintien est alors disposé sensiblement au centre de l'embout d'extrémité, cet organe de maintien étant ainsi aussi loin de l'une ou l'autre des faces externes dudit embout d'extrémité.

Un inconvénient de cette solution réside dans le fait que cet organe de maintien est positionné à l'intérieur de l'embout d'extrémité, ce qui le rend difficilement accessible à un utilisateur qui souhaite le désengager afin, par exemple, de remplacer la lame d'essuyage plutôt que l'intégralité du balai d'essuyage. En conséquence, lorsque l'utilisateur doit ôter l'embout d'extrémité, ce dernier doit utiliser un outil afin de pouvoir désengager ledit embout d'extrémité.

En plus de leur fonction mécanique, les embouts d'extrémités peuvent présenter une fonction esthétique, permettant de cacher les extrémités des balais d'essuyage. Afin de remplir cette fonction, l'organe de maintien de l'embout d'extrémité peut être dissimulé dans l'embout, de préférence avec un accès sur une partie inférieure de cet embout, c'est-à-dire une partie de cet embout tournée vers la surface vitrée à essuyer.

De nouveau, cette solution présente l'inconvénient de rendre l'organe de maintien difficilement accessible à l'utilisateur. EP 3 135 547 A1 divulgue un embout d'extrémité selon le préambule de la revendication 1.

Un but de la présente invention est donc de proposer un embout d'extrémité pour balai d'essuyage comprenant un organe de maintien de l'embout d'extrémité qui est difficile d'accès mais qui peut néanmoins facilement être actionné en cas de besoin, notamment en pouvant être dégagé sans l'aide d'outil.

Un objet de la présente invention concerne ainsi un embout d'extrémité pour balai d'essuyage, s'étendant longitudinalement entre une paroi de fond et une bouche d'entrée configurée pour introduire un élément de structure du balai d'essuyage dans l'embout d'extrémité, cet embout d'extrémité comprenant au moins un premier logement configuré pour recevoir une lame d'essuyage, un deuxième logement configuré pour recevoir l'élément de structure et un troisième logement dans lequel s'étend un moyen d'accrochage de l'embout d'extrémité à l'élément de structure, le premier logement et le deuxième logement étant disposé l'un au-dessus de l'autre dans un plan longitudinal de l'embout d'extrémité.

Selon la présente invention, l'embout d'extrémité est reconnaissable en ce que le moyen d'accrochage comprend une patte flexible autour d'un axe vertical parallèle, ou sensiblement parallèle, au plan longitudinal, cette patte flexible présentant une forme de « L » dont au moins une branche s'étend vers un bord délimitant le troisième logement.

L'embout d'extrémité selon la présente invention s'étend principalement selon un axe longitudinal. Le plan longitudinal est un plan qui s'étend le long de la plus grande dimension de l'embout d'extrémité. L'axe longitudinal de l'embout s'inscrit donc dans ce plan longitudinal, ce dernier étant un plan qui coupe le premier logement et le deuxième logement.

Lorsque que le deuxième logement s'étend dans un plan horizontal, le plan longitudinal peut être un plan longitudinal vertical, c'est-à-dire perpendiculaire au plan horizontal du deuxième logement.

Selon l'invention, l'une des branches de la patte flexible s'étend selon une direction longitudinale parallèle à l'axe longitudinal de l'embout d'extrémité, et l'autre branche s'étend perpendiculairement, ou sensiblement perpendiculairement, à cette direction longitudinale, vers un bord délimitant partiellement le troisième logement. Plus précisément, cette autre branche s'étend vers un bord délimitant une ouverture du troisième logement. Cette ouverture permet notamment de rendre le moyen d'accrochage facilement accessible pour l'utilisateur.

Par exemple, une grande branche de la patte flexible peut s'étendre selon la direction longitudinale et une petite branche de cette patte flexible peut s'étendre vers le bord délimitant l'ouverture du troisième logement. Selon un autre exemple, une petite branche de la patte flexible peut s'étendre selon la direction longitudinale et une grande branche de cette patte flexible peut s'étendre vers le bord délimitant l'ouverture du troisième logement.

Selon une caractéristique de la présente invention, une extrémité libre de la branche de la patte flexible qui s'étend vers le bord affleure un plan dans lequel s'inscrit l'ouverture du troisième logement délimité par le bord.

Selon une caractéristique de la présente invention, la patte flexible présente une zone de préhension configurée pour permettre de libérer l'embout d'extrémité de l'élément de structure, cette zone de préhension étant formée par une extrémité libre de l'une des branches de la patte flexible. Cette zone de préhension est formée par l'extrémité libre de la branche s'étendant vers le bord délimitant l'ouverture du troisième logement.

On comprend ainsi que la combinaison de la forme de la patte flexible avec son orientation vers l'ouverture du troisième logement permet à l'utilisateur de désengager l'embout d'extrémité du balai d'essuyage sur lequel il est destiné à être intégré, sans avoir à utiliser d'outil quelconque.

Selon un aspect de la présente invention, le premier logement et le deuxième logement de l'embout d'extrémité comprennent une paroi intermédiaire commune, cette paroi intermédiaire émergeant de la paroi de fond de l'embout d'extrémité et s'étendant principalement dans un plan d'extension longitudinal, c'est-à-dire un plan dans lequel s'inscrit l'axe longitudinal de l'embout d'extrémité.

Selon une caractéristique de la présente invention, le deuxième logement est réalisé dans une position centrale de l'embout d'extrémité. Ce deuxième logement est ainsi disposé à des distances sensiblement équivalentes d'une paroi inférieure de l'embout d'extrémité et d'une paroi supérieure de cet embout d'extrémité, cette paroi inférieure et cette paroi supérieure émergeant de la paroi de fond de l'embout d'extrémité et s'étendant parallèlement à la paroi intermédiaire qui sépare le premier logement du deuxième logement. La paroi inférieure participe à la délimitation du premier logement et la paroi supérieure participe à la délimitation du deuxième logement.

L'ouverture du troisième logement peut par exemple être ménagée dans l'une des parois qui délimitent le premier logement. Avantageusement, cette ouverture est ménagée dans la paroi inférieure de l'embout d'extrémité.

Selon la présente invention, une branche de la patte flexible s'étend au moins partiellement dans le deuxième logement. Par exemple, une branche de la patte flexible prolonge un flanc qui délimite partiellement le deuxième logement, et une autre branche de la patte flexible s'étend dans le troisième logement en longeant le premier logement, cette dernière branche étant celle qui s'étend vers le bord délimitant l'ouverture du troisième logement. On comprend alors que cette autre branche de la patte flexible longe le premier logement selon une direction parallèle à l'axe vertical autour duquel cette patte est flexible.

Selon un exemple de réalisation de la présente invention, une grande branche de la patte flexible prolonge le flanc délimitant partiellement le deuxième logement et une petite branche de la patte flexible est orientée vers le bord délimitant le troisième logement.

Selon un autre exemple de réalisation de la présente invention, la petite branche de la patte flexible prolonge le flanc délimitant partiellement le deuxième logement et la grande branche de la patte flexible est orientée vers le bord délimitant le troisième logement.

Selon un exemple de réalisation de la présente invention, le moyen d'accrochage qui s'étend dans le troisième logement est un premier moyen d'accrochage et l'embout d'extrémité comprend un quatrième logement dans lequel s'étend un deuxième moyen d'accrochage de l'embout d'extrémité à l'élément de structure, ce deuxième moyen d'accrochage comprenant une languette flexible autour d'un axe parallèle au plan longitudinal vertical dans lequel s'inscrivent le premier logement et le deuxième logement, cette languette flexible présentant une forme de « L » dont au moins une branche s'étend vers un bord délimitant le quatrième logement, le troisième logement et le quatrième logement étant ménagés de part et d'autre du premier logement et du deuxième logement.

Selon cet exemple de réalisation, l'embout d'extrémité peut être indifféremment positionné à chacune des extrémités longitudinales de l'élément de structure qu'il est destiné à recouvrir. L'utilisateur n'a alors aucun besoin d'appairer un embout d'extrémité particulier avec une extrémité longitudinale donnée de l'élément de structure.

Selon cet exemple de réalisation, deux ouvertures sont ménagées dans la paroi inférieure de l'embout d'extrémité, une première ouverture étant associée au troisième logement et une deuxième ouverture étant associée au quatrième logement. Une extrémité libre de l'une des branches de la patte flexible affleure un premier plan dans lequel s'inscrit le bord délimitant la première ouverture et une extrémité libre de l'une des branches de la languette flexible affleure un deuxième plan dans lequel s'inscrit un bord délimitant la deuxième ouverture. Ce premier plan et ce deuxième plan peuvent se confondre ou être distincts, la première ouverture et la deuxième ouverture étant toutes deux ménagées dans la même paroi.

Selon une caractéristique de la présente invention, un corps de l'embout d'extrémité et au moins un moyen d'accrochage sont monoblocs, c'est-à-dire issus ensemble de la même matière.

Cet embout d'extrémité peut par exemple être réalisé en un matériau synthétique.

On entend par « corps de l'embout d'extrémité » toutes les parties de l'embout d'extrémité ne participant pas au moyen d'accrochage, à l'exclusion des logements. En d'autres termes, le premier logement, le deuxième logement, le troisième logement et le moyen d'accrochage sont ménagés dans le corps de l'embout d'extrémité.

On comprend que selon l'exemple de réalisation dans lequel l'embout d'extrémité comprend un deuxième moyen d'accrochage, les deux moyens d'accrochage sont issus de matière avec le corps de l'embout d'extrémité.

Selon une caractéristique de la présente invention, le corps de l'embout peut être configuré pour recevoir un déflecteur d'air d'un balai d'essuyage.

La présente invention concerne également un balai d'essuyage comprenant une lame d'essuyage, au moins un élément de structure et au moins un embout d'extrémité selon la présente invention, cette lame d'essuyage et cet élément de structure s'étendant principalement selon un axe longitudinal, et l'élément de structure comprenant au moins une encoche ménagée à au moins une extrémité longitudinale de cet élément de structure, cette encoche coopérant avec le moyen d'accrochage de l'embout d'extrémité.

Selon un aspect de la présente invention, le balai d'essuyage peut comprendre deux embouts d'extrémité respectivement agencés à chacune des extrémités longitudinales du balai d'essuyage.

L'expression « extrémité longitudinale du balai d'essuyage » couvre à la fois une extrémité longitudinale de la lame d'essuyage et une extrémité longitudinale de l'élément de structure.

La présente invention comprend encore un système d'essuyage pour véhicule automobile comprenant au moins un balai d'essuyage selon la présente invention, ce balai d'essuyage étant connecté à un bras d'entrainement par un dispositif de connexion.

D'autres détails, caractéristiques et avantages ressortiront plus clairement à la lecture de la description détaillée donnée ci-après à titre indicatif, en relation avec les différents modes de réalisation illustrés sur les figures suivantes :
- la figure 1 est une représentation schématique d'un système d'essuyage comprenant au moins un embout d'extrémité selon la présente invention ;
- la figure 2 est une vue en perspective de dessous de l'embout d'extrémité, de la lame d'essuyage et d'un élément de structure destinés à être reçu dans cet embout d'extrémité ;
- la figure 3 est une vue en perspective de l'embout d'extrémité selon la présente invention ;
- la figure 4 est une vue en perspective d'une coupe selon un plan longitudinal, ici vertical, de l'embout d'extrémité selon la présente invention.

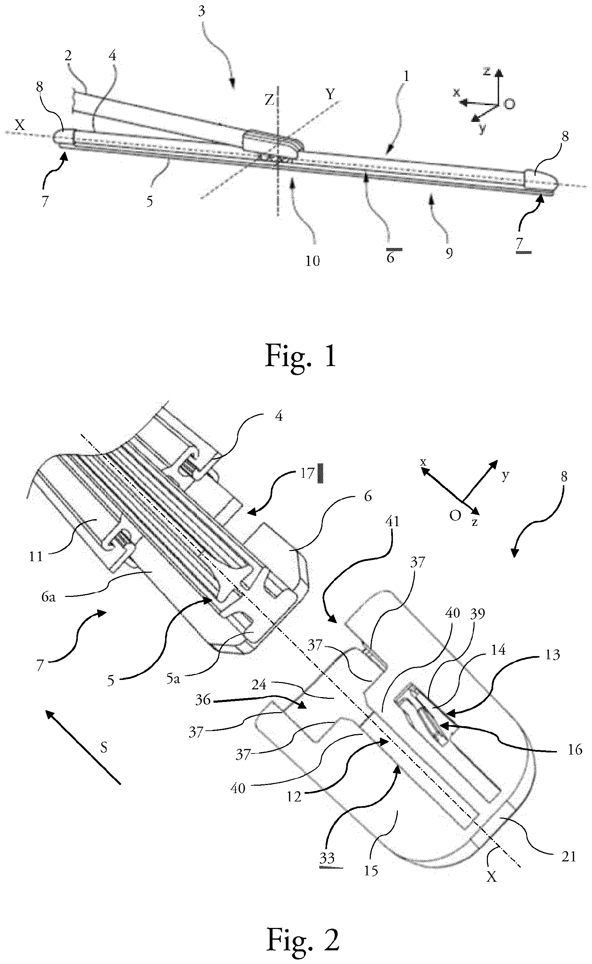

Sur les figures, les dénominations longitudinale, transversale, verticale, latérale, gauche, droite, supérieure, inférieure, se réfèrent à l'orientation, dans un repère orthonormé Oxyz, d'un balai d'essuyage 1 illustré sur la figure 1. Dans ce repère, l'axe Ox représente la direction longitudinale, l'axe Oy représente la direction transversale, et l'axe Oz représente la direction verticale de l'objet considéré, notamment l'embout d'extrémité ou le balai d'essuyage. Dans ce repère, un plan longitudinal vertical est parallèle au plan Oxz, un plan transversal vertical est parallèle au plan Oyz et un plan longitudinal horizontal est parallèle à un plan Oxy.

Sur la figure 1, un balai d'essuyage 1 de la présente invention s'étend selon un axe longitudinal X, parallèle à l'axe Ox. Les dénominations gauche et droite s'apprécient par rapport à une position le long d'un axe transversal Y, parallèle à l'axe Oy, de part et d'autre de l'axe longitudinal X. Un axe vertical Z symbolise une direction verticale, parallèle à celle de l'axe Oz, qui est perpendiculaire aux directions longitudinale et transversale décrites ci-dessus. Les dénominations supérieure ou inférieure se rapportent à des orientations le long de l'axe vertical Z, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 2 du balai d'essuyage 1, la dénomination intérieure correspondant à une partie où le bras d'entraînement 2 et un demi-balai s'étendent, la dénomination extérieure correspondant à une partie où l'autre demi-balai s'étend.

Un véhicule automobile est couramment équipé d'un système d'essuyage 3 pour évacuer une eau et/ou des salissures présentes sur une surface vitrée, notamment une lunette arrière ou un pare-brise avant de véhicule automobile. Le système d'essuyage 3 comprend le bras d'entraînement 2 qui est apte à effectuer un mouvement de va-et-vient angulaire le long et au-dessus de la surface vitrée.

Le système d'essuyage 3 comprend aussi le balai d'essuyage 1 qui s'étend selon l'axe longitudinal X. Le balai d'essuyage 1 comprend une lame d'essuyage 5 qui s'étend également selon cet axe longitudinal X et au moins un déflecteur d'air 4. Le déflecteur d'air 4 est prévu pour transformer une pression appliquée par un flux d'air circulant le long de la surface vitrée en une force d'appui du balai d'essuyage 1 contre la surface vitrée du véhicule automobile.

La lame d'essuyage 5 est la pièce du balai d'essuyage 1 en contact direct avec la surface vitrée pour évacuer l'eau et/ou les salissures présentes sur cette dernière. La lame d'essuyage 5 est par exemple une lame souple réalisée en un matériau élastique, tel qu'un polymère ou un caoutchouc, notamment.

Le balai d'essuyage 1 comprend aussi un élément de structure 6 qui confère au balai d'essuyage 1 une certaine déformation dans le plan Oxz, de manière à répartir la force d'appui du bras d'entraînement 2 le long du balai d'essuyage 1 et à suivre ainsi un galbe de la surface vitrée.

L'élément de structure 6 peut être une bande métallique, autrement appelé vertèbre, qui s'étend selon l'axe longitudinal X. Une telle vertèbre peut être unique mais l'élément de structure 6 peut également comprendre deux de ces vertèbres, alors disposées l'une à côté de l'autre dans le plan Oxy.

Tel qu'illustré sur la figure 2, l'élément de structure 6 peut également être la combinaison d'un support 11, dans lequel est ménagé un canal longitudinal, avec une bande métallique unique 6a enfilée dans le canal. Dans un tel cas, le support 11 peut comprendre deux crochets qui retiennent la lame racleuse 5 par son talon 5a, le support 11 assurant alors un lien mécanique entre la lame racleuse 5 et la bande métallique 6a.

En référence aux figures 1 et 2, le balai d'essuyage 1 comprend également à chacune de ses extrémités longitudinales 7 un embout d'extrémité 8. Chaque embout d'extrémité 8 est prévu pour maintenir ensemble la lame d'essuyage 5 et l'élément de structure 6, un tel embout d'extrémité 8 pouvant par exemple couvrir une partie terminale du déflecteur d'air 4. L'élément de structure 6 s'étend donc d'une première extrémité longitudinale 7 du balai d'essuyage 1 à une deuxième extrémité longitudinale 7 du même balai d'essuyage 1.

Le déflecteur d'air 4, la lame d'essuyage 5 et l'élément de structure 6 forment une structure semi-rigide 9 qui est portée par un dispositif de connexion 10, interposé entre une partie terminale du bras d'entraînement 2 et la structure semi-rigide 9. Un tel dispositif de connexion 10 comprend par exemple un connecteur solidaire au moins de manière isostatique de la structure semi-rigide 9, et un adaptateur relié par une liaison pivot au connecteur.

La figure 2 représente l'une des extrémités longitudinales 7 du balai d'essuyage 1 destiné à être intégré au système s'essuyage 3, ainsi qu'un embout d'extrémité 8 destiné à être assemblé sur cette extrémité longitudinale 7 du balai d'essuyage 1.

Tel que précédemment décrit, le balai d'essuyage comprend la lame d'essuyage 5, l'élément de structure 6 et le déflecteur d'air 4, cette lame d'essuyage 5, cet élément de structure 6 et le déflecteur d'air 4 étant, selon un exemple représenté sur cette figure, maintenus ensemble par le support 11. Tel que cela est illustré sur cette figure 2, les extrémités longitudinales de l'élément de structure 6 et de la lame d'essuyage 5 dépassent longitudinalement du support 11. Avant le montage de l'embout d'extrémité 8, les extrémités longitudinales 7 de ces éléments sont donc libres.

Tel que précédemment décrit, les embouts d'extrémités 8 sont configurés pour maintenir au moins la lame d'essuyage 5 avec l'élément de structure 6 au niveau de ces extrémités longitudinales 7. En d'autres termes, ces embouts d'extrémités 8 assurent le rôle du support 11 au niveau des extrémités longitudinales 7 du balai d'essuyage.

L'embout d'extrémité 8 s'étend principalement le long de l'axe longitudinal X, entre une paroi de fond 21 et une bouche d'entrée 41 par laquelle l'élément de structure 6 du balai d'essuyage entre dans l'embout d'extrémité 8 pour se loger dans un logement dédié à cet effet, ce logement étant ci-après appelé deuxième logement 19.

L'embout d'extrémité 8 comprend au moins un premier logement 12 configuré pour recevoir la lame d'essuyage 5 du balai d'essuyage 1 et au moins un deuxième logement, non visible sur la figure 2, configuré pour recevoir l'élément de structure 6, et en particulier une partie terminale de la vertèbre. En regard du premier logement 12, une paroi inférieure 15 de l'embout d'extrémité 8 comprend une fente 33 par laquelle est introduite la lame d'essuyage 5 dans ce premier logement 12. Cette fente 33 est bordée par deux crochets 40 configurés pour maintenir la lame d'essuyage 5 dans le premier logement 12. Ces deux crochets 40 sont plus particulièrement configurés pour enserrer un talon 5a de cette lame d'essuyage 5.

Tel qu'illustré, l'embout d'extrémité 8 est glissé sur l'extrémité longitudinale 7 du balai d'essuyage 1 selon une direction S parallèle à l'axe longitudinal X de l'embout d'extrémité 8.

Tel que cela est visible sur la figure 2, l'embout d'extrémité 8 comprend en outre un troisième logement 13 qui est bordé par une ouverture 14, ménagée dans la paroi inférieure 15 de l'embout d'extrémité 8 et délimitée par un bord 39. Cette ouverture 14 laisse apparaître un moyen d'accrochage 16 de l'embout d'extrémité 8 à l'élément de structure 6.

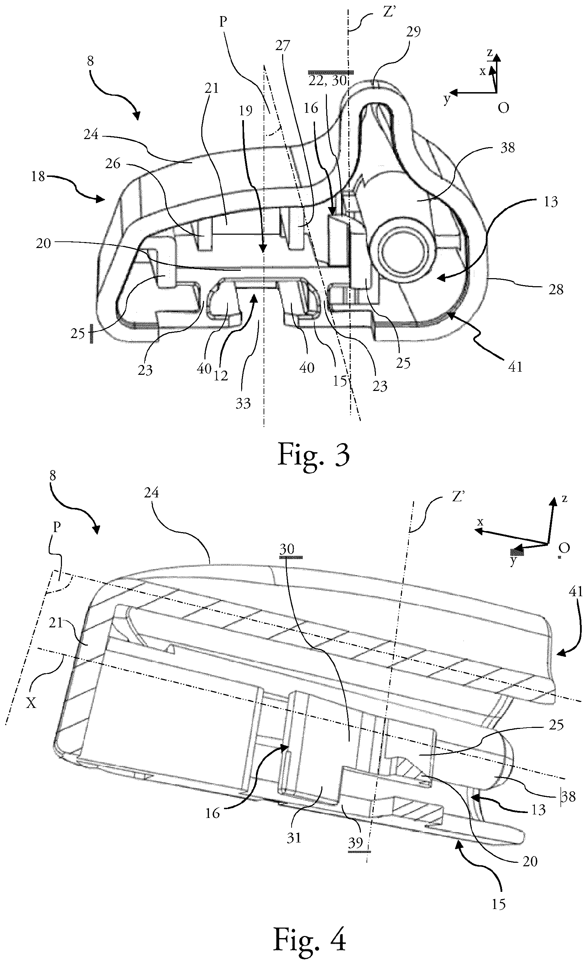

Ce moyen d'accrochage 16, qui sera plus amplement décrit dans la suite de la description, notamment en référence aux figures 3 et 4, est configuré pour venir se loger dans une encoche 17 ménagée dans l'élément de structure 6. Tel qu'illustré, cette encoche 17 est ménagée depuis un bord longitudinal de l'élément de structure 6.

L'embout d'extrémité 8 comprend également un évidement 36 qui débouche au travers de la paroi inférieure 15, et qui s'étend jusqu'à une extrémité longitudinale de l'embout d'extrémité 8. Un débouché de cet évidement 36 est ainsi délimité par quatre bords 37. Ces bords 37 servent de butée au balai d'essuyage 1 et plus particulièrement au support 11 de ce balai d'essuyage 1.

Cet évidement 36 laisse ainsi apparaître une paroi supérieure 24 de l'embout d'extrémité 8.

Nous allons maintenant décrire plus en détails l'embout d'extrémité 8 en référence aux figures 3 et 4, la figure 3 étant une vue de l'embout d'extrémité 8 depuis le dispositif de connexion du balai d'essuyage et la figure 4 étant une vue en perspective d'une coupe de cet embout d'extrémité 8 réalisée selon un plan longitudinal P, notamment vertical, parallèle au plan Oxz.

Dans sa généralité, l'embout d'extrémité 8 est formé d'un corps 18 dans lequel sont ménagés le premier logement 12 configuré pour recevoir la lame d'essuyage, le deuxième logement 19 configuré pour recevoir l'élément de structure et le troisième logement 13 dans lequel s'étend le moyen d'accrochage 16 de l'embout d'extrémité 8 à l'élément de structure.

Tel que cela est visible sur la figure 3, le premier logement 12 et le deuxième logement 19 s'étendent parallèlement à l'axe longitudinal X et sont disposés l'un au-dessous de l'autre, verticalement. En d'autres termes, le premier logement 12 et le deuxième logement 19 sont agencés directement l'un au-dessous de l'autre, dans le plan longitudinal P, ce dernier coupant chacun des logements. Ce premier logement 12 et ce deuxième logement 19 présentent ainsi une paroi intermédiaire 20 commune. Cette paroi intermédiaire 20 est issue de matière avec la paroi de fond 21 de l'embout d'extrémité 8 et s'étend dans un plan d'extension longitudinal parallèle au plan Oxy du repère orthonormé.

Le premier logement 12 est délimité par la paroi intermédiaire 20, par la paroi inférieure 15 de l'embout d'extrémité 8, par deux parois latérales 23 reliant cette paroi intermédiaire 20 à cette paroi inférieure 15 et, optionnellement par la paroi de fond 21 de l'embout d'extrémité 8. La paroi inférieure 15 est issue de matière avec la paroi de fond 21 de l'embout d'extrémité 8 et s'étend parallèlement à la paroi intermédiaire 20. Tel que précédemment décrit, la fente 33 par laquelle est introduite la lame d'essuyage 5 dans le premier logement 12 est ménagée dans la paroi inférieure 15 de l'embout d'extrémité 8. Cette fente 33 est délimitée par les deux crochets 40 configurés pour maintenir la lame d'essuyage 5 dans le premier logement 12.

Le deuxième logement 19 est quant à lui délimité par la paroi intermédiaire 20, par la paroi supérieure 24 de l'embout d'extrémité 8, par deux flancs 25, par un plan dans lequel s'inscrivent une extrémité libre d'un premier montant 26 issu de la paroi supérieure 24 et une extrémité libre d'un deuxième montant 27 également issu de cette paroi supérieure 24, et optionnellement par la paroi de fond 21. On comprend que ces montants 26, 27 sont parallèles entre eux et permettent de bloquer verticalement, c'est-à-dire le long de l'axe Oz, l'élément de structure destiné à être reçu dans ce deuxième logement 19.

Le troisième logement 13 est situé latéralement au premier logement 12 et au deuxième logement 19, c'est-à-dire à droite - ou à gauche - de ces logements 12, 19. Ce troisième logement 13 est délimité par la paroi inférieure 15, par la paroi supérieure 24, par l'un des flancs 25 délimitant le deuxième logement 19 et optionnellement par une paroi latérale 28 de l'embout d'extrémité 8, cette paroi latérale 28 de l'embout d'extrémité reliant la paroi supérieure 24 à la paroi inférieure 15 de cet embout d'extrémité 8.

On remarque que la paroi supérieure 24 présente une arête 29, réalisée en regard, ou sensiblement en regard, du troisième logement 13 et configurée pour recevoir une partie terminale du déflecteur d'air du balai d'essuyage. Selon un exemple de réalisation de la présente invention non illustré ici, la paroi supérieure de l'embout d'extrémité est régulière et ne présente pas cette arête, l'embout d'extrémité étant alors destiné à être intégré sur un balai d'essuyage ne comprenant pas de déflecteur d'air.

Tel que précédemment décrit, le moyen d'accrochage 16 de l'embout d'extrémité à l'élément de structure s'étend dans le troisième logement 13. Tel qu'on peut le voir, un manchon 38 s'étend également dans ce troisième logement 13. Ce manchon 38 est issu de la paroi de fond 21 de l'embout d'extrémité 8 et s'étend parallèlement à la direction longitudinale Ox du repère orthonormé. Ce manchon 38 est configuré pour boucher un conduit ménagé dans le balai d'essuyage dans lequel circule un liquide permettant de nettoyer la surface vitrée sur laquelle est disposé le balai d'essuyage comprenant l'embout d'extrémité 8.

Le moyen d'accrochage 16 comprend quant à lui une patte flexible 22 autour d'un axe vertical Z', cette patte flexible 22 présentant une forme de « L » dont une branche s'étend longitudinalement à partir de l'un des flancs 25 délimitant le deuxième logement 19 et dont l'autre branche longe verticalement le premier logement 12, par exemple en longeant verticalement l'une des parois latérales 23 participant à la délimitation de ce premier logement 12.

L'une des branches de cette forme de « L » s'étend selon une direction longitudinale parallèle à la direction longitudinale Ox du repère orthonormé illustré sur les figures 3 et 4. L'autre branche de cette forme de L s'étend perpendiculairement, ou sensiblement perpendiculairement, à cette direction longitudinale, parallèlement à la direction verticale Oz de ce repère orthonormé, vers un bord 39 du troisième logement 13. Plus précisément, cette autre branche s'étend vers le bord 39 délimitant l'ouverture 14 du troisième logement 13 ménagée dans la paroi inférieure 15 de l'embout d'extrémité 8.

Tel qu'illustré, la branche de la patte flexible 22 qui émerge du flanc 25 s'étend au moins en partie dans le deuxième logement 19. On comprend donc que lorsque l'élément de structure du balai d'essuyage est glissé dans le deuxième logement, la patte flexible 22 vient en interférence mécanique avec l'élément de structure et peut ainsi coopérer avec l'encoche ménagée dans cet élément de structure.

Selon un exemple de réalisation de la présente invention illustré sur les figures 3 et 4, une grande branche 30 de la patte flexible 22 s'étend selon la direction longitudinale et une petite branche 31 de cette patte flexible 22 s'étend vers le bord 39 de l'ouverture 14 du troisième logement 13. Tel que cela est notamment visible sur la figure 4, une extrémité libre 32 de la petite branche 31 de la patte flexible 22 affleure un plan dans lequel s'inscrit cette ouverture 14.

Selon un autre exemple de réalisation non illustré ici, la petite branche de la patte flexible s'étend selon la direction longitudinale et la grande branche de cette patte flexible s'étend vers l'ouverture du troisième logement, une extrémité libre de cette grande branche affleurant alors le plan dans lequel s'inscrit cette ouverture.

Selon l'exemple de réalisation illustré sur les figures 3 et 4, la petite branche 31 est une zone de préhension manuelle de la patte flexible 22. Ainsi, une fois cette patte flexible 22 engagée dans l'encoche de l'élément de structure, l'utilisateur peut facilement désengager cette patte flexible 22 en la faisant pivoter autour de l'axe vertical Z' afin de désengager l'embout d'extrémité 8 du balai d'essuyage. Pour faciliter ce désengagement, une flèche peut être réalisée sur la paroi inférieure 15 de l'embout d'extrémité afin d'indiquer le sens dans lequel l'utilisateur doit pousser la patte flexible 22 afin de la dégager de l'encoche.

Selon une variante de réalisation de la présente invention non représentée ici, l'embout d'extrémité peut comprendre un quatrième logement ménagé à l'opposé du troisième logement par rapport au premier logement et au deuxième logement. Autrement dit, selon cette variante de réalisation, le troisième logement et le quatrième logement sont ménagés respectivement à droite et à gauche du premier logement et du deuxième logement. Selon cette variante de réalisation, le moyen d'accrochage décrit ci-dessus est un premier moyen d'accrochage et un deuxième moyen d'accrochage s'étend dans le quatrième logement, ce deuxième moyen d'accrochage comprenant une languette flexible autour d'un axe parallèle à l'axe vertical autour duquel est mobile la patte flexible décrite ci-dessus.

Cette variante de réalisation présente l'avantage de pouvoir adapter l'embout d'extrémité à n'importe quelle extrémité longitudinale du balai d'essuyage, sans que l'utilisateur n'ait à réfléchir pour faire coïncider le moyen d'accrochage à l'encoche ménagée dans l'élément de structure.

La présente invention propose ainsi un embout d'extrémité 8 pour balai d'essuyage 1 comprenant un moyen d'accrochage 16 de cet embout d'extrémité 8 à un élément de structure 6 du balai d'essuyage 1, ce moyen d'accrochage 16 permettant un désengagement simple de l'embout d'extrémité 8 et ne nécessitant aucun outillage.

L'invention ne saurait toutefois se limiter aux moyens et configurations décrits et illustrés ici. En particulier, les dimensions et la position du moyen d'accrochage peuvent être modifiées sans nuire à l'invention, dans la mesure où elles remplissent les fonctionnalités décrites dans le présent document.

## Revendications

1. Embout d'extrémité (8) pour balai d'essuyage (1), s'étendant longitudinalement entre une paroi de fond (21) et une bouche d'entrée (41) configurée pour introduire un élément de structure (6) du balai d'essuyage (1) dans l'embout d'extrémité (8), cet embout d'extrémité (8) comprenant au moins un premier logement (12) configuré pour recevoir une lame d'essuyage (5), un deuxième logement (19) configuré pour recevoir l'élément de structure (6) et un troisième logement (13) dans lequel s'étend un moyen d'accrochage (16) de l'embout d'extrémité (8) à l'élément de structure (6), le premier logement (12) et le deuxième logement (19) étant disposés l'un au-dessus de l'autre dans un plan longitudinal (P) de l'embout d'extrémité (8), le moyen d'accrochage (16) comprenant une patte flexible (22) autour d'un axe vertical (Z') parallèle au plan longitudinal (P), **caractérisé en ce que** la patte flexible (22) présente une forme de « L » dont au moins une branche (30, 31) s'étend vers un bord (39) délimitant le troisième logement (13).

2. Embout d'extrémité (8) selon la revendication précédente, dans lequel une extrémité libre (32) de la branche (30, 31) de la patte flexible (22) qui s'étend vers le bord (39) affleure un plan dans lequel s'inscrit une ouverture (14) du troisième logement (13) délimité par le bord (39).

3. Embout d'extrémité (8) selon la revendication précédente, dans lequel l'ouverture (14) du troisième logement (13) est ménagée dans une paroi (15) de l'embout d'extrémité (8) qui délimite le premier logement (12).

4. Embout d'extrémité (8) selon l'une quelconque des revendications précédentes, dans lequel une branche (30, 31) de la patte flexible (22) s'étend au moins partiellement dans le deuxième logement (19).

5. Embout d'extrémité (8) selon l'une quelconque des revendications précédentes, dans lequel une branche (30, 31) de la patte flexible (22) prolonge un flanc (25) qui délimite partiellement le deuxième logement (19), et dans lequel une autre branche (30, 31) de la patte flexible (22) s'étend dans le troisième logement (13) en longeant le premier logement (12).

6. Embout d'extrémité (8) selon la revendication précédente, dans lequel une grande branche (30) de la patte flexible (22) prolonge le flanc (25) délimitant partiellement le deuxième logement (19) et dans lequel une petite branche (31) de la patte flexible (22) est orientée vers le bord (39) délimitant le troisième logement (13).

7. Embout d'extrémité (8) selon l'une quelconque des revendications précédentes, dans lequel un corps (18) de l'embout d'extrémité (8) et le moyen d'accrochage (16) sont monoblocs.

8. Embout d'extrémité (8) selon la revendication précédente, dans lequel le corps (18) de l'embout d'extrémité (8) est configuré pour recevoir un déflecteur d'air (4) d'un balai d'essuyage (1).

9. Balai d'essuyage (1) comprenant une lame d'essuyage (5), au moins un élément de structure (6) et au moins un embout d'extrémité (8) selon l'une quelconque des revendications précédentes, la lame d'essuyage (5) et l'élément de structure (6) s'étendant principalement selon un axe longitudinal (X) et l'élément de structure (6) comprenant au moins une encoche (17) ménagée à au moins une extrémité longitudinale de cet élément de structure (6), l'encoche (17) coopérant avec le moyen d'accrochage (16) de l'embout d'extrémité (8).

10. Balai d'essuyage (1) selon la revendication précédente, comprenant deux embouts d'extrémité (8) respectivement agencés à chacune des extrémités longitudinales (7) du balai d'essuyage (1).

## Patentansprüche

1. Endstück (8) für Scheibenwischerarm (1), der sich longitudinal zwischen einer Bodenwand (21) und einer Eingangsmündung (41), die konfiguriert ist, ein Strukturelement (6) des Scheibenwischerarms (1) in das Endstück (8) einzuführen, erstreckt, wobei dieses Endstück (8) wenigstens einen ersten Aufnahmeraum (12), der konfiguriert ist, ein Wischerblatt (5) aufzunehmen, einen zweiten Aufnahmeraum (19), der konfiguriert ist, das Strukturelement (6) aufzunehmen, und einen dritten Aufnahmeraum (13), in dem sich ein Mittel (16) zum Einhaken des Endstücks (8) in dem Strukturelement (6) erstreckt, umfasst, wobei der erste Aufnahmeraum (12) und der zweite Aufnahmeraum (19) in einer longitudinalen Ebene (P) des Endstücks (8) übereinander angeordnet sind, wobei das Einhakmittel (16) eine Lasche (22) aufweist, die um eine zu der longitudinalen Ebene (P) parallele vertikale Achse (Z') biegsam ist, **dadurch gekennzeichnet, dass** die biegsame Lasche (22) eine "L"-Form hat, wovon sich wenigstens ein Schenkel (30, 31) zu einem Rand (39), der den dritten Aufnahmeraum (13) begrenzt, erstreckt.

2. Endstück (8) nach dem vorhergehenden Anspruch, wobei ein freies Ende (32) des Schenkels (30, 31) der biegsamen Lasche (22) sich zu dem Rand (39) erstreckt, der mit einer Ebene bündig ist, in die eine Öffnung (14) des dritten Aufnahmeraums (13), der durch den Rand (39) begrenzt ist, eingeschrieben ist.

3. Endstück (8) nach dem vorhergehenden Anspruch, wobei die Öffnung (14) des dritten Aufnahmeraums (13) in einer Wand (15) des Endstücks (8), die den ersten Aufnahmeraum (12) begrenzt, ausgespart ist.

4. Endstück (8) nach einem der vorhergehenden Ansprüche, wobei sich ein Schenkel (30, 31) der biegsamen Lasche (22) wenigstens teilweise in dem zweiten Aufnahmeraum (19) erstreckt.

5. Endstück (8) nach einem der vorhergehenden Ansprüche, wobei ein Schenkel (30, 31) der biegsamen Lasche (22) eine Seitenfläche (25), die den zweiten Aufnahmeraum (19) teilweise begrenzt, verlängert und wobei sich ein anderer Schenkel (30, 31) der biegsamen Lasche (22) in dem dritten Aufnahmeraum (13) entlang des Aufnahmeraums (12) erstreckt.

6. Endstück (8) nach dem vorhergehenden Anspruch, wobei ein großer Schenkel (30) der biegsamen Lasche (22) die Seitenfläche (25), die den zweiten Aufnahmeraum (19) teilweise begrenzt, verlängert und wobei ein kleiner Schenkel (31) der biegsamen Platte (22) zu dem Rand (39), der den dritten Aufnahmeraum (13) begrenzt, orientiert ist.

7. Endstück (8) nach einem der vorhergehenden Ansprüche, wobei ein Körper (18) des Endstücks (8) und das Einhakmittel (16) einteilig ausgebildet sind.

8. Endstück (8) nach dem vorhergehenden Anspruch, wobei der Körper (18) des Endstücks (8) konfiguriert ist, eine Luftablenkeinrichtung eines Scheibenwischerarms (1) aufzunehmen.

9. Scheibenwischerarm (1), der ein Wischerblatt (5), wenigstens ein Strukturelement (6) und ein Endstück (8) nach einem der vorhergehenden Ansprüche umfasst, wobei sich das Wischerblatt (5) und das Strukturelement (6) hauptsächlich längs einer longitudinalen Achse (X) erstrecken und das Strukturelement (6) wenigstens eine Kerbe (17) aufweist, die an wenigstens einem longitudinalen Ende dieses Strukturelements (6) ausgespart ist, wobei die Kerbe (17) mit dem Einhakmittel (16) des Endstücks (8) zusammenwirkt.

10. Scheibenwischerarm (1) nach dem vorhergehenden Anspruch, der zwei Endstücke (8) umfasst, die an dem einen bzw. dem anderen longitudinalen Ende (7) des Scheibenwischerarms (1) angeordnet sind.

## Claims

1. An end piece (8) for a wiper blade (1), extending longitudinally between a bottom wall (21) and an inlet (41) for inserting a structural element (6) of the wiper blade (1) into the end piece (8), said end piece (8) including at least one first housing (12) configured to receive a wiper rubber (5), a second housing (19) adapted to receive the structural element (6), and a third housing (13) into which a means (16) for attaching the end piece (8) to the structural element (6) extends, the first housing (12) and the second housing (19) being arranged one above the other in a longitudinal plane (P) of the end piece (8), the attaching means (16) including a lug (22) which is flexible around a vertical axis (Z') parallel to the longitudinal plane (P), **characterized in that** the flexible lug (22) has an "L" shape, at least one branch (30, 31) of which extends toward an edge (39) delimiting the third housing (13).

2. The end piece (8) as claimed in the preceding claim, in which a free end (32) of the branch (30, 31) of the flexible lug (22) that extends toward the edge (39) is flush with a plane in which is inscribed an opening (14) of the third housing (13) delimited by the edge (39).

3. The end piece (8) as claimed in the preceding claim, in which the opening (14) of the third housing (13) is in a wall (15) of the end piece (8) that delimits the first housing (12).

4. The end piece (8) as claimed in any one of the preceding claims, in which one branch (30, 31) of the flexible lug (22) extends at least partly into the second housing (19).

5. The end piece (8) as claimed in any one of the preceding claims, in which one branch (30, 31) of the flexible lug (22) extends a flank (25) that partly delimits the second housing (19) and in which another branch (30, 31) of the flexible lug (22) extends into the third housing (13) along the first housing (12).

6. The end piece (8) as claimed in the preceding claim, in which a larger branch (30) of the flexible lug (22) extends the flank (25) partly delimiting the second housing (19) and in which a smaller branch (31) of the flexible lug (22) is oriented toward the edge (39) delimiting the third housing (13).

7. The flexible end (8) as claimed in any one of the preceding claims, in which a body (18) of the end piece (8) and the attachment means (16) are in one piece.

8. The end piece (8) as claimed in the preceding claim, in which the body (18) of the end piece (8) is configured to receive an air deflector (4) of a wiper blade (1).

9. A wiper blade (1) including a wiper rubber (5), at least one structural element (6) and at least one end piece (8) as claimed in any one of the preceding claims, the wiper rubber (5) and the structural element (6) extending mainly along a longitudinal axis (X) and the structural element (6) including at least one notch (17) at one longitudinal end at least of that structural element (6), the notch (17) cooperating with the attachment means (16) of the end piece (8).

10. The wiper blade (1) as claimed in the preceding claim, including two end pieces (8) at respective longitudinal ends (7) of the wiper blade (1).
